(19) Europäisches Patentamt
European Patent Office
Office européen des brevets

(11) EP 4 205 996 A1

# (12) EUROPEAN PATENT APPLICATION
published in accordance with Art. 153(4) EPC

(43) Date of publication:
**05.07.2023 Bulletin 2023/27**

(21) Application number: **21872578.6**

(22) Date of filing: **24.09.2021**

(51) International Patent Classification (IPC):
***B60C 1/00*** (2006.01) ***C08L 9/00*** (2006.01)
***C08L 9/06*** (2006.01) ***C08K 3/013*** (2018.01)
***C08K 3/04*** (2006.01) ***C08K 3/36*** (2006.01)

(52) Cooperative Patent Classification (CPC):
**B60C 1/00; C08K 3/013; C08K 3/04; C08K 3/36; C08L 9/00; C08L 9/06**

(86) International application number:
**PCT/JP2021/035171**

(87) International publication number:
**WO 2022/065449 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2020 JP 2020161963**

(71) Applicant: **SUMITOMO CHEMICAL COMPANY, LIMITED**
**Tokyo 103-6020 (JP)**

(72) Inventors:
- **KAMIMOTO, Natsuyo**
**Ichihara-shi, Chiba 299-0195 (JP)**
- **URANO, Wakaba**
**Ichihara-shi, Chiba 299-0195 (JP)**

(74) Representative: **Vossius & Partner**
**Patentanwälte Rechtsanwälte mbB**
**Siebertstraße 3**
**81675 München (DE)**

## (54) VULCANIZED RUBBER COMPOSITION AND TIRE

(57) A vulcanized rubber composition according to one aspect of the present invention comprises a rubber component containing a diene-based rubber and a filler containing silica, and a total of an amount of monosulfide crosslinks and an amount of carbon-carbon crosslinks is 30% to 55% based on an amount of total crosslinks of the vulcanized rubber composition.

EP 4 205 996 A1

## Description

### Technical Field

The present invention relates to a vulcanized rubber composition and a tire.

### Background Art

Low fuel consumption and abrasion resistance are important performances of tires, and improvement in these performances is required. As a rubber composition for a motor vehicle tire, a rubber composition containing a conjugated diene-based polymer such as a conjugated diene-based elastomer, polybutadiene or a styrene-butadiene copolymer is used. For example, in Patent Literature 1, it is disclosed to improve the low fuel consumption of a rubber composition by blending a disulfide compound having a specific structure, and, in Patent Literature 2, it is disclosed to improve the abrasion resistance of a rubber composition by blending a disulfide compound having a specific structure therein.

### Citation List

### Patent Literature

Patent Literature 1: JP 2010-018716 A
Patent Literature 2: JP 2019-052297 A

### Summary of Invention

### Technical Problem

Ordinarily, the abrasion resistance of a tire is evaluated by actual vehicle evaluation, but is evaluated using a DIN abrasion tester under a condition where severity called the slip ratio is extremely high in order for simpler measurement. However, abrasion of a tire occurs in a broad region of severity, and thus the evaluation of the abrasion resistance under a condition with a low severity is also important. For a rubber composition being used for a tire, improvement in the abrasion resistance of a tire not only in a high severity region but also in a low severity region is required.

An objective of the present invention is to provide a vulcanized rubber composition capable of improving the abrasion resistance of a tire in a low severity region and a tire having excellent abrasion resistance in a low severity region.

### Solution to Problem

One aspect of the present invention relates to a vulcanized rubber composition containing a rubber component containing a diene-based rubber and a filler containing silica, wherein a total of an amount of monosulfide crosslinks and an amount of carbon-carbon crosslinks based on the amount of total crosslinks of the vulcanized rubber composition is 30% to 55%.

Another aspect of the present invention relates to a tire comprising a rubber member containing the vulcanized rubber composition.

### Advantageous Effects of Invention

According to the present invention, it is possible to provide a vulcanized rubber composition capable of improving the abrasion resistance of a tire in a low severity region and a tire having excellent abrasion resistance in a low severity region.

### Description of Embodiments

Hereinafter, several embodiments of the present invention will be described in detail. However, the present invention is not limited to the following embodiments.

[Vulcanized Rubber Composition]

A vulcanized rubber composition according to the present embodiment contains a rubber component containing a diene-based rubber and a filler containing silica.

When the amount of monosulfide crosslinks (amount of C-S-C crosslinks) and the amount of carbon-carbon crosslinks (amount of C-C crosslinks) in the vulcanized rubber composition are adjusted to a specific range, it is possible to improve abrasion resistance with a low severity that is also referred to as "FPS abrasion resistance". "FPS abrasion resistance" is abrasion resistance that is measured using an FPS abrasion resistance tester and is a testing method enabling the evaluation of abrasion resistance in a low severity region by arbitrarily adjusting the rotation speeds of a sample and a road surface.

From the viewpoint of improving the abrasion resistance of a tire in a low severity region, the total of the amount of monosulfide crosslinks and the amount of carbon-carbon crosslinks based on the amount of total crosslinks of the vulcanized rubber composition is 30% to 55%, preferably 35% to 50%, more preferably 38% to 48% and still more preferably 39% to 48%. The total of the amount of monosulfide crosslinks and the amount of carbon-carbon crosslinks may be 40% to 50% or 40% to 48%.s

From the viewpoint of further enhancing the abrasion resistance of a tire in a low severity region, the amount of disulfide crosslinks (amount of C-S-S-C crosslinks) based on the amount of total crosslinks of the vulcanized rubber composition is preferably 10% or less, more preferably 6% or less and still more preferably 4% or less.

The amount of total crosslinks, the amount of C-S-C crosslinks, the amount of C-S-S-C crosslinks and the amount of C-C crosslinks of the vulcanized rubber composition can be measured by a method to be described in examples with reference to "Analysis of Crosslinking Structure by Compressive Property of the Swollen Rubber (Part 1) Development of Testing Method" described in Journal of the Society of Rubber Science and Technology, Japan 60.5 (1987), pp. 267 to 272.

The vulcanized rubber composition according to the present embodiment can be produced by vulcanizing a rubber composition containing a rubber component containing a diene-based rubber, a filler containing silica and a vulcanizing agent. Hereinafter, components that the rubber composition can contain will be described.

(Rubber Component)

The rubber component contains a diene-based rubber. The diene-based rubber means a rubber where a diene monomer having a conjugated double bond is used as a raw material. Examples of the diene-based rubber include styrene-butadiene copolymer rubber (SBR), natural rubber (NR), butadiene rubber (BR), isoprene rubber (IR), nitrile rubber (NBR), chloroprene rubber (CR), isoprene-isobutylene copolymer rubber (IIR), ethylene-propylene-diene copolymer rubber (EPDM) and halogenated butyl rubber (HR). The diene-based rubbers may be used singly or in combination of two or more.

Examples of SBR include emulsion polymerized SBR and solution polymerized SBR described in pp. 210 and 211 of "Rubber Industry Handbook <fourth edition>" edited by the Society of Rubber Science and Technology, Japan. As a rubber composition for a tread, solution polymerized SBR is preferable.

Examples of the solution polymerized SBR include solution polymerized SBR where a molecular end has been modified using 4,4'-bis(dialkylamino)benzophenone such as "Nipol (R) NS116" manufactured by Zeon Corporation, solution polymerized SBR where a molecular end has been modified using a halogenated tin compound such as "SL574" manufactured by JSR Corporation and silane-modified solution polymerized SBR such as "E10" and "E15" manufactured by Asahi Kasei Corporation. In addition, it is also possible to use oil-extended SBR obtained by adding an oil such as a process oil or an aroma oil to the emulsion polymerized SBR and solution polymerized SBR.

As BR, ordinary BR in the tire industry can be used. Examples of BR include solution polymerized BR such as high cis BR having 90% or more of cis 1,4 bonds and low cis BR having approximately 35% of cis bonds. Since an abrasion resistance improvement effect can be enhanced, BR having a high cis content is preferable, and high cis BR where the cis content is 95 mass% or more is more preferable. Examples of the high cis BR include "BR1220" manufactured by Zeon Corporation and "BR150B" manufactured by Ube Industries, Ltd.

It is also possible to use modified BR having at least one element of nitrogen, tin and silicon at a molecular end, which can be obtained by modification with a modifier. Examples of the modifier include 4,4'-bis(dialkylamino)benzophenone, halogenated tin compounds, lactam compounds, amide compounds, urea compounds, N,N-dialkylacrylamide compounds, isocyanate compounds, imide compounds, silane compounds having an alkoxy group (for example, trialkoxysilane compound), aminosilane compounds, tin compounds and alkylacrylamide compounds. These modifiers may be used singly or in combination of two or more. Examples of the modified BR include tin-modified BR such as "Nipol (R) BR1250H" manufactured by Zeon Corporation.

The rubber component preferably contains SBR and BR, and the content of SBR and BR in the rubber component is preferably 50 to 100 mass%, more preferably 70 to 100 mass%, still more preferably 80 to 100 mass% and particularly

preferably 100 mass%. The mass ratio of the amount of BR to the amount of SBR (amount of BR/amount of SBR) may be 5/95 to 50/50, 10/90 to 40/60 or 15/85 to 30/70 from the viewpoint of low fuel consumption and the abrasion resistance.

The content of a structural unit having a cis bond in the rubber component may be 10 mol% or more or may be 10 to 40 mol%, 20 to 38 mol% or 25 to 35 mol% from the viewpoint of further enhancing the abrasion resistance.

(Filler)

A filler according to the present embodiment contains silica. Examples of the silica include dry silica (silicic anhydride), wet silica (hydrous silicic acid), colloidal silica and precipitated silica. The BET specific surface area of the silica is preferably 20 to 400 $m^2/g$, more preferably 50 to 350 $m^2/g$ and still more preferably 100 to 300 $m^2/g$. The BET specific surface area is measured by a BET method according to ASTM D1993-03.

Examples of a commercially available product of the silica include product names "ULTRASIL VN3", "ULTRASIL VN3-G", "ULTRASIL 360", "ULTRASIL 5000GR", "ULTRASIL 7000GR" and "ULTRASIL 9100GR" manufactured by Evonik Industries AG; product names "Nipsil VN3", "Nipsil AQ", "Nipsil ER" and "Nipsil RS-150" manufactured by Tosoh Silica Corporation; and product names "Zeosil 115GR", "Zeosil 1115MP", "Zeosil 1165MP", "Zeosil 1205MP" and "Zeosil Z85MP" manufactured by Solvay S. A. The silica may be used singly or in combination of two or more types.

The content of the silica is preferably 10 to 120 parts by mass, more preferably 20 to 120 parts by mass, still more preferably 30 to 120 parts by mass, particularly preferably 40 to 100 parts by mass and most preferably 50 to 100 parts by mass with respect to 100 parts by mass of the rubber component from the viewpoint of low fuel consumption and the abrasion resistance.

The filler may further contain carbon black. Examples of the carbon black include furnace carbon black, acetylene black, thermal black, channel black, and graphite. Examples of the channel black include EPC, MPC and CC. Examples of the furnace carbon black include SAF, ISAF, HAF, MAF, FEF, SRF, GPF, APF, FF, CF, SCF and ECF. Examples of the thermal black include FT and MT. The carbon black may be used singly or in combination of two or more types.

The BET specific surface area of the carbon black is preferably 10 to 130 $m^2/g$, more preferably 20 to 130 $m^2/g$ and still more preferably 40 to 130 $m^2/g$. As a commercially available product of the carbon black, it is possible to use product name "DIABLACK N339" manufactured by Mitsubishi Chemical Corporation, product names "SEAST 6", "SEAST 7HM" and "SEAST KH" manufactured by Tokai Carbon Co., Ltd., product names "CK 3" and "Special Black 4A" manufactured by Orion Engineered Carbons S. A. and the like.

The content of the carbon black is preferably 1 to 25 parts by mass, more preferably 2 to 20 parts by mass and still more preferably 3 to 15 parts by mass with respect to 100 parts by mass of the rubber component from the viewpoint of low fuel consumption, the abrasion resistance and reinforcement.

When the proportion of the carbon black to the silica is excessive, since the radical scavenging action of the carbon black is large, there is a tendency that the formation of a C-C bond and a C-S bond is hindered. The proportion of the carbon black to the silica (the mass of the carbon black/the mass of the silica) is preferably 33 mass% or less, more preferably 20 mass% or less, still more preferably 15 mass% or less and particularly preferably 10 mass% or less from the viewpoint of further improving low fuel consumption and the abrasion resistance.

The filler may contain a different filler other than the silica and the carbon black. Examples of the different filler include calcium silicate, aluminum silicate, aluminum hydroxide, pulverized bituminous coal, talc, clay (particularly, calcined clay) and titanium oxide.

(Vulcanizing Agent)

Examples of the vulcanizing agent include sulfur and sulfur-based compounds. The vulcanizing agents may be used singly or in combination of two or more. Examples of the sulfur include powdered sulfur, precipitated sulfur, colloidal sulfur, insoluble sulfur and surface-treated sulfur. The content of the vulcanizing agent in the rubber composition may be 0.1 to 5 parts by mass, 0.3 to 3 parts by mass or 0.5 to 2 parts by mass with respect to 100 parts by mass of the rubber component.

(Compound Forming C-S Bond)

The rubber composition of the present embodiment may contain a compound forming a C-S bond in the vulcanized rubber composition from the viewpoint of adjusting the amount of monosulfide crosslinks. As the compound forming a C-S bond, an aromatic compound including a sulfur atom and a nitrogen atom (hereinafter, simply referred to as "aromatic compound" in some cases) may be used. The aromatic compound may have a nitrogen-containing hetero ring such as a pyrimidine ring or a pyridine ring or an aromatic hydrocarbon ring such as a benzene ring as an aromatic ring. The aromatic compound may have a disulfide bond, a thiocarbonyl group or a mercapto group as a structure including a sulfur atom.

Examples of the aromatic compound having a nitrogen-containing hetero ring and a disulfide bond include a compound represented by the following formula (1).

[Chemical Formula 1]

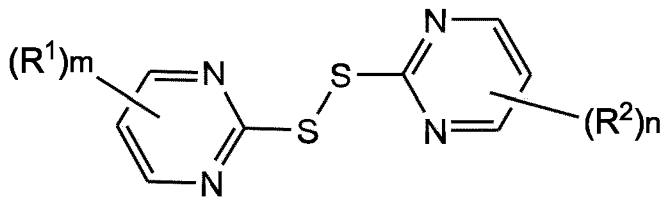

(1)

m and n in the formula (1) are each independently 0 to 3, preferably 0 to 2 and more preferably 0 or 2.

$R^1$ and $R^2$ in the formula (1) each independently represent a halogen atom, an optionally substituted alkyl group having 1 to 18 carbon atoms, an optionally substituted cycloalkyl group having 3 to 10 carbon atoms, an optionally substituted aryl group having 6 to 18 carbon atoms, an optionally substituted aralkyl group having 7 to 20 carbon atoms, a carboxy group, an optionally substituted alkoxycarbonyl group having 1 to 18 carbon atoms, an optionally substituted cycloalkyloxycarbonyl group having 3 to 10 carbon atoms, an optionally substituted aryloxycarbonyl group having 6 to 18 carbon atoms, an optionally substituted aralkyloxycarbonyl group having 7 to 20 carbon atoms, an optionally substituted carbamoyl group, a hydroxy group, an optionally substituted alkoxy group having 1 to 18 carbon atoms, an optionally substituted cycloalkyloxy group having 3 to 10 carbon atoms, an optionally substituted aryloxy group having 6 to 18 carbon atoms, an optionally substituted aralkyloxy group having 7 to 20 carbon atoms, an optionally substituted alkylcarbonyloxy group having 1 to 18 carbon atoms, an optionally substituted cycloalkylcarbonyloxy group having 3 to 10 carbon atoms, an optionally substituted arylcarbonyloxy group having 6 to 18 carbon atoms, an optionally substituted aralkylcarbonyloxy group having 7 to 20 carbon atoms, an optionally substituted amino group or a nitro group. In a case where m is 2 or 3, a plurality of $R^1$s may be each the same as or different from each other, and, in a case where n is 2 or 3, a plurality of $R^2$s may be each the same as or different from each other. $R^1$ and $R^2$ may be each independent or form a cyclic structure.

Examples of the aromatic compound having a nitrogen-containing hetero ring and a thiocarbonyl group include a compound represented by the following formula (2) or (3).

[Chemical Formula 2]

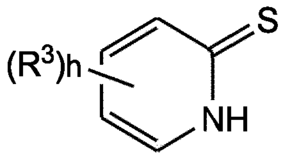

(2)

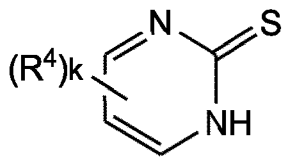

(3)

h in the formula (2) is 0 to 4, and $R^3$ is the same meaning as the group exemplified as $R^1$ and $R^2$ in the formula (1). k in the formula (3) is 0 to 3, and $R^4$ is the same meaning as the group exemplified as $R^1$ and $R^2$ in the formula (1). In a case where h is 2 to 4, a plurality of $R^3$s may be each the same as or different from each other, and, in a case where k is 2 or 3, a plurality of $R^4$s may be each the same as or different from each other. $R^3$ and $R^4$ may be each independent or form a cyclic structure.

Examples of the aromatic compound having a mercapto group include a compound represented by the following formula (4) or (5).

[Chemical Formula 3]

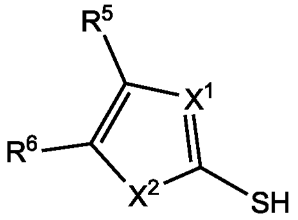

(4)

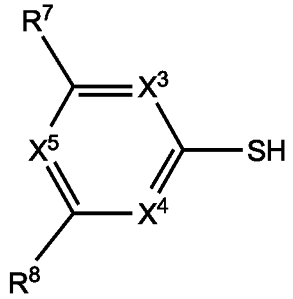

(5)

$X^1$ in the formula (4) represents a methine group or a nitrogen atom, $X^2$ represents a methylene group or an amino group, and $R^5$ and $R^6$ are each independently a hydrogen atom or the same meaning as the group exemplified as $R^1$ and $R^2$ in the formula (1). $R^5$ and $R^6$ may be each independent or form a cyclic structure. $X^3$, $X^4$ and $X^5$ in the formula (5) each independently represent a methine group or a nitrogen atom, and $R^7$ and $R^8$ are each independently a hydrogen atom or the same meaning as the group exemplified as $R^1$ and $R^2$ in the formula (1). $R^7$ and $R^8$ may be each independent or form a cyclic structure.

The content of the compound represented by the formulae (1) to (5) in the rubber composition is preferably 0.3 to 10 parts by mass, more preferably 1.0 to 6 parts by mass and still more preferably 1.5 to 5 parts by mass with respect to 100 parts by mass of the rubber component from the viewpoint of low fuel consumption and the abrasion resistance.

(Other Components)

The rubber composition of the present embodiment can further contain, in addition to the above-described components, other components to an extent that the effect of the present invention is not significantly impaired. Examples of the other components include a vulcanization accelerator, a vulcanization aid, a processing aid, an anti-aging agent, an extender oil and a silane coupling agent.

Examples of the vulcanization accelerator include thiazole vulcanization accelerators such as 2-mercaptobenzothiazole and dibenzothiazyl disulfide; thiuram vulcanization accelerators such as tetramethylthiuram monosulfide and tetramethylthiuram disulfide; sulfenamide vulcanization accelerators such as N-cyclohexyl-2-benzothiazolesulfenamide, N-t-butyl-2-benzothiazolesulfenamide, N-oxyethylene-2-benzothiazolesulfenamide, N-oxyethylene-2-benzothiazolesulfenamide and N,N'-diisopropyl-2-benzothiazolesulfenamide; and guanidine vulcanization accelerators such as diphenylguanidine, di-ortho-tolylguanidine and ortho-tolylbiguanidine. The vulcanization accelerators may be used singly or in combination of two or more. From the viewpoint of adjusting the amount of monosulfide crosslinks in the vulcanized rubber composition, it is preferable to use a sulfenamide vulcanization accelerator. The content of the vulcanization accelerator in the rubber composition may be 0.5 to 8 parts by mass, 1 to 5 parts by mass or 2 to 4 parts by mass with respect to 100 parts by mass of the rubber component.

Examples of the vulcanization aid include triallyl isocyanurate, N,N'-m-phenylenebismaleimide, methacrylic acid, methyl methacrylate, ethyl methacrylate, propyl methacrylate, isopropyl methacrylate, n-butyl methacrylate, i-butyl methacrylate, sec-butyl methacrylate, t-butyl methacrylate, 2-ethylhexyl methacrylate, cyclohexyl methacrylate, isodecyl methacrylate, lauryl methacrylate, tridecyl methacrylate, stearyl methacrylate, 2-hydroxyethyl methacrylate, hydroxypropyl methacrylate, polyethylene glycol monomethacrylate, polypropylene glycol monomethacrylate, 2-ethoxyethyl methacrylate, tetrahydrofurfuryl methacrylate, allyl methacrylate, glycidyl methacrylate, benzyl methacrylate, dimethylaminoethyl methacrylate, diethylaminoethyl methacrylate, methacryloxyethyl phosphate, 1,4-butanediol diacrylate, ethylene glycol dimethacrylate, 1,3-butylene glycol dimethacrylate, neopentyl glycol dimethacrylate, 1,6-hexanediol dimethacrylate, diethylene glycol dimethacrylate, triethylene glycol dimethacrylate, polyethylene glycol dimethacrylate, dipropylene glycol dimethacrylate, polypropylene glycol dimethacrylate, trimethylolethane trimethacrylate, trimethylol propane trimethacrylate, allyl glycidyl ether, N-methylol methacrylamide, 2,2-bis(4-methacryloxypolyethoxyphenyl)propane, aluminum methacrylate, zinc methacrylate, calcium methacrylate, magnesium methacrylate, 3-chloro-2-hydroxypropyl methacrylate, zinc oxide and magnesium oxide. The vulcanization aids may be used singly or in combination. The content of the vulcanization aid in the rubber composition may be 0.1 to 15 parts by mass or 0.1 to 8 parts by mass with respect to 100 parts by mass of the rubber component.

Examples of the processing aid include fatty acids such as oleic acid, palmitic acid and stearic acid; fatty acid metal salts such as zinc laurate, zinc stearate, barium stearate and calcium stearate; fatty acid esters; and glycols such as ethylene glycol and polyethylene glycol. The processing aids may be used singly or in combination. The content of the processing aid in the rubber composition may be 0.1 to 10 parts by mass or 0.1 to 8 parts by mass with respect to

100 parts by mass of the rubber component.

As the anti-aging agent, an amine-based anti-aging agent, a sulfur-based anti-aging agent or both may be contained. The content of the anti-aging agent in the rubber composition may be 0.1 to 10 parts by mass or 0.1 to 8 parts by mass with respect to 100 parts by mass of the rubber component.

Examples of the amine-based anti-aging agent include naphthylamine anti-aging agents such as phenyl-α-naphthylamine and phenyl-β-naphthylamine; diphenylamine anti-aging agents such as p-(p-toluenesulfonylamido)diphenylamine, 4,4'-bis(α,α-dimethylbenzyl)diphenylamine, alkylated diphenylamine (for example, octylated diphenylamine), dioctylated diphenylamine (for example, 4,4'-dioctyldiphenylamine), high-temperature reaction products of diphenylamine and acetone, low-temperature reaction products of diphenylamine and acetone, low-temperature reaction products of diphenylamine, aniline and acetone and reaction products of diphenylamine and diisobutylene; p-phenylenediamine anti-aging agents such as N,N'-diphenyl-p-phenylenediamine, N-isopropyl-N'-phenyl-p-phenylenediamine, N,N'-di-2-naphthyl-p-phenylenediamine, N-cyclohexyl-N'-phenyl-p-phenylenediamine, N-phenyl-N'-(3-methacryloyloxy-2-hydroxypropyl)-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-(1,3-dimethylbutyl)-N'-phenyl-p-phenylenediamine, N-hexyl-N'-phenyl-p-phenylenediamine and N-octyl-N'-phenyl-p-phenylenediamine.

Examples of the sulfur-based anti-aging agent include imidazole anti-aging agents such as 2-mercaptobenzimidazole, zinc salts of 2-mercaptobenzimidazole, 2-mercaptomethylbenzimidazole, zinc salts of 2-mercaptomethylbenzimidazole and zinc salts of 2-mercaptomethylimidazole; and aliphatic thioether anti-aging agents such as dimyristylthiodipropionate, dilaurylthiodipropionate, distearylthiodipropionate, ditridecylthiodipropionate and pentaerythritol-tetrakis(β-lauryl-thiopropionate).

Examples of the extender oil include aromatic mineral oil (viscosity-gravity constant (V G. C. value): 0.900 to 1.049), naphthenic mineral oil (V G. C. value: 0.850 to 0.899) and paraffinic mineral oil (V G. C. value: 0.790 to 0.849). The polycyclic aromatic content of the extender oil is preferably less than 3 mass% and more preferably less than 1 mass%. The polycyclic aromatic content is measured according to the Institute of Petroleum's 346/92 method. The aromatic compound content (CA) of the extender oil is preferably 20 mass% or more. The extender oils may be used singly or in combination of two or more.

Examples of the silane coupling agent include vinyltrichlorosilane, vinyltriethoxysilane, vinyltris(β-methoxyethoxy)silane, β-(3,4-epoxycyclohexyl)ethyltrimethoxysilane, γ-glycidoxypropyltrimethoxysilane, γ-methacryloxypropyltrimethoxysilanesilane, N-((3-aminoethyl)- γ-aminopropyltrimethoxysilane, N-((3-aminoethyl)- γ-aminopropylmethyldimethoxysilane, N-phenyl-γ-aminopropyltrimethoxysilane, γ-chloropropyltrimethoxysilane, γ-mercaptopropyltrimethoxysilane, γ-aminopropyltriethoxysilane, bis(3-(triethoxysilyl)propyl)disulfide, bis(3-(triethoxysilyl)propyl)tetrasulfide, γ-trimethoxysilylpropyldimethylthiocarbamyltetrasulfide and γ-trimethoxysilylpropylbenzothiazyltetrasulfide. The silane coupling agents may be used singly or in combination of two or more. As a commercially available product, it is possible to use product names "Si69", "Si75", "Si266" and the like manufactured by Evonik Industries AG, product names "NXT Silane", "NXT-Z30", "NXT Z45", "NXT-Z60", "NXT-Z100" and the like manufactured by Momentive Performance Materials and the like.

The content of the silane coupling agent is preferably 1 to 20 parts by mass, more preferably 2 to 15 parts by mass and still more preferably 5 to 10 parts by mass with respect to 100 parts by mass of the filler.

The vulcanized rubber composition according to the present embodiment can be manufactured by a method where the individual components are kneaded with a well-known mixer such as a roll or a Banbury mixer to prepare a rubber composition and then the rubber composition is vulcanized while being heated.

The rubber composition may be prepared in an order of the following step (1) and step (2). In the step (1), the components other than the vulcanizing agent and the vulcanization accelerator are kneaded using a Banbury mixer to obtain a kneaded product. The kneading temperature in the step (1) is normally 50°C to 200°C and preferably 80°C to 190°C, and the kneading time is normally 30 seconds to 30 minutes and preferably one minute to 30 minutes. Next, in the step (2), the kneaded product obtained in the step (1), the vulcanizing agent and the vulcanization accelerator are kneaded to obtain the rubber composition. The kneading temperature in the step (2) is normally 100°C or lower and preferably room temperature to 80°C. The vulcanized rubber composition is produced by performing a vulcanization treatment such as press vulcanization on the rubber composition obtained in the step (2). The vulcanization temperature is normally 120°C to 200°C and preferably 140°C to 180°C.

The vulcanized rubber composition according to the present embodiment is useful to manufacture a tire and a rubber member for a tire. A tire according to the present embodiment includes a rubber member containing the above-described vulcanized rubber composition. The rubber member may be coated with a steel cord or a carcass fiber cord or may be a tread. Examples of the rubber member include a belt member for a tire containing the vulcanized rubber composition and a steel cord, a carcass member for a tire containing the vulcanized rubber composition and a carcass fiber cord, a sidewall member for a tire, an inner liner member for a tire, a cap tread member for a tire and a undertread member for a tire.

The vulcanized rubber composition according to the present embodiment can be used not only for tire usage

but also for anti-vibration rubber usage, rubber belt usage, damping agent usage, seismic isolation rubber usage and the like. Examples of the anti-vibration rubber usage include anti-vibration rubber for a motor vehicle such as an engine mount, a strut mount, a bushing and an exhaust hanger. Examples of the rubber belt usage include a transmission belt, a conveyor belt and a V-belt.

## Examples

Hereinafter, the present invention will be more specifically described using examples. However, the present invention is not limited to these examples.

As raw materials for preparing rubber compositions, the following components were prepared.

(Rubber Component)

SBR-1: Styrene-butadiene copolymer rubber (manufactured by Zeon Corporation, product name "Nipol NS540", cis amount: 18 mass%)
SBR-2: Styrene-butadiene copolymer rubber (manufactured by Asahi Kasei Corporation, product name "TUFDENE 3835", cis amount: 18 mass%)
SBR-3: Styrene-butadiene copolymer rubber (manufactured by Sumitomo Chemical Co., Ltd., product name "SE-0212", cis amount: 13.5 mass%)
SBR-4: Styrene-butadiene copolymer rubber (manufactured by Asahi Kasei Corporation, product name "TUFDENE T2000R", cis amount: 35 mass%)
BR: Butadiene rubber (manufactured by JSR Corporation, product name "BR01", cis amount: 97.5 mass%)

(Filler)

Silica: (manufactured by Tosoh Silica Corporation, product name "Nipsil (R) AQ", BET specific surface area: 205 $m^2/g$)
Carbon black: Carbon black HAF (manufactured by Asahi Carbon Co., Ltd., product name: "ASAHI #70")

(Other Components)

Vulcanization aid: Zinc oxide (manufactured by Mitsui Mining & Smelting Co., Ltd.)
Processing aid: Stearic acid (manufactured by NOF Corporation)
Anti-aging agent: N-phenyl-N'-1,3-dimethylbutyl-p-phenylenediamine (manufactured by Kawaguchi Chemical Industry Co., Ltd., product name "ANTAGE 6C")
Extender oil: TDAE oil (manufactured by H&R Group, product name "VivaTec 500")
Silane coupling agent: Bis(triethoxysirylpropyl)disulfide (manufactured by Evonik Industries AG, product name "Si-75")
Vulcanizing agent: Powdered sulfur (manufactured by Hosoi Chemical Industry Co., Ltd., product name "FINE POWDER SULFUR S")
Vulcanization accelerator (1): N-cyclohexyl-2-benzothiazolylsulfenamide (CBS) (ACCEL CZ) (manufactured by Kawaguchi Chemical Industry Co., Ltd.)
Vulcanization accelerator (2): Diphenylguanidine (DPG) (manufactured by Kawaguchi Chemical Industry Co., Ltd., product name "ACCEL D")
Compound (2): 4,6-Dimethyl-2-mercaptopyrimidine (manufactured by Tokyo Chemical Industry Co., Ltd.)
Compound (3): Tetrabenzylthiuram disulfide (manufactured by Kawaguchi Chemical Industry Co., Ltd., product name "ACCEL TBZT")

(Manufacturing Example 1)

A compound (1) corresponding to a compound represented by the formula (1): 2,2'-bis(4,6-dimethylpyrimidyl) disulfide was synthesized according to a method described in JP 2019-52297 A.

[Example 1]

(Rubber Composition)

100 Parts by mass of SBR-1, 20 parts by mass of BR, 75 parts by mass of silica, 5 parts by mass of carbon black, 2 parts by mass of stearic acid, 3 parts by mass of zinc oxide, 1.5 parts by mass of the anti-aging agent, 10 parts by mass of TDAE oil, 6 parts by mass of the silane coupling agent and 2 parts by mass of the compound (1) were kneaded for five minutes using a Banbury mixer (manufactured by Kobe Steel, Ltd., 1700 mL) under conditions of a mixer set temperature of 95°C and a rotor rotation speed of 70 rpm. The temperature of a kneaded product at the end of the kneading was 160°C to 170°C. The obtained kneaded product was kneaded with 1.0 part by mass of the vulcanization accelerator (1), 2.0 parts by mass of the vulcanization accelerator (2) and 1.3 parts by mass of powdered sulfur using an open roll machine having a roll set temperature of 60°C, thereby obtaining a rubber composition.

(Vulcanized Rubber Composition)

The rubber composition was heated at 170°C for 55 minutes to be vulcanized, thereby obtaining a vulcanized rubber composition. The vulcanized rubber composition is suitable for a cap tread use.

[Examples 2 to 4]

Vulcanized rubber compositions were obtained in the same manner as in Example 1 except that rubber compositions were prepared with the components and the blending amounts (parts by mass) changed as shown in Table 1.

[Comparative Examples 1 to 6 and 8]

Vulcanized rubber compositions were obtained in the same manner as in Example 1 except that rubber compositions were prepared with the components and the blending amounts (parts by mass) changed as shown in Table 2.

[Comparative Example 7]

A vulcanized rubber composition was obtained in the same manner as in Example 1 except that rubber composition was prepared with the components and the blending amounts (parts by mass) changed as shown in Table 2 and the rubber composition was heated at 150°C for 15 minutes to be vulcanized.

[Evaluation of Vulcanized Rubber Composition]

(Amount of Monosulfide Crosslinks and Amount of carbon-carbon crosslinks)

The total (vC-C + vC-S-C) of the amount of monosulfide crosslinks (vC-S-C) and the amount of carbon-carbon crosslinks (vC-C) and the total amount of crosslinks (vT) were measured as cross-link densities (mol/$cm^3$) by the following method. Before the measurement, soxhlet extraction of the vulcanized rubber composition was performed for approximately eight hours using acetone as a solvent, thereby removing the extender oil or a substance inhibiting a reaction that was contained in the vulcanized rubber composition.

From a slab sheet obtained by molding the vulcanized rubber composition to a thickness of 1 to 2 mm, a rubber piece was cut out to a length of 2 mm × a width of 2 mm × a height of 1 to 2 mm (according to the sample thickness), and the following treatments were performed on the rubber piece.

Treatment (1): The rubber piece was put into a liquid mixture of dry tetrahydrofuran (THF) and toluene and placed still for 24 hours, thereby obtaining a sample (1) where the rubber piece had swollen.

Treatment (2): The rubber piece was put into a solution obtained by adding 2-propanethiol (iPrSH) and piperidine to a liquid mixture of dry THF and toluene (volume ratio: 1/1) so as to be each 0.4 M/L and placed still for 24 hours, and then the rubber piece was washed with a liquid mixture of dry THF and toluene several times, thereby obtaining a sample (2). Only a C-S-Sx-S-C (polysulfide) cross-link in the rubber piece was cut by the present treatment.

Treatment (3): The sample was put into a solution obtained by excessively putting lithium aluminum hydride ($LiAlH_4$) to a dry THF/toluene (volume ratio: 1/1) liquid mixture and placed still for 24 hours, and then the sample was washed with a dry THF/toluene liquid mixture several times, thereby obtaining a sample (3). A C-S-Sx-S-C cross-link and a C-S-S-C (disulfide) cross-link other than a C-S-C (monosulfide) cross-link and a C-C (carbon-carbon) cross-link in the rubber piece were cut by the present treatment.

A compression test of TMA was performed at 20°C in the height direction on the sample from each of the treatments (1), (2) and (3) while being immersed in a liquid mixture of dry THF and toluene, and a compressive strain $\alpha$ with respect to a stress f (g/cm$^2$) was obtained. In TMA measurement, "TMA/SS6100" (manufactured by SII Nanotechnology Inc.) was used. Obtained values were assigned into the following formula, whereby the total density of crosslinks (vT), the density of C-C + C-S-C crosslinks (vC-C + C-S-C) and the density of C-S-S-C crosslinks (vC-S-S-C) were calculated as cross-link densities (mol/cm$^3$) from the mesh amount of the sample (1), the mesh amount of the sample (3) and subtraction of the mesh amount of the sample (3) from the mesh amount of the sample (2), respectively.

[Math 1]

$$\nu = \frac{f}{\left(\frac{1}{\alpha^2} - \alpha\right)} \cdot \frac{1}{\left[\left\{\left(\frac{L_{LO}}{L_O}\right)^3 - \phi\right\} \Big/ \left(1 - \phi\right)\right]^{1/3} KT}$$

In the formula, $\alpha$ represents the compressive strain, f represents the stress (g/cm$^2$), K represents 8.314 $\times$ 10$^4$ (g·cm/K·mol), $L_{L0}$ represents the thickness (mm) of the sample after swelling, $L_0$ represents the thickness (mm) of the sample before swelling, $\phi$ represents the volume (cm$^3$) of the filler and T represents the absolute temperature (K).

(Cis Amount of Rubber Component)

The cis amount of the rubber component was calculated from the cis amounts of SBR and BR used for the preparation of the rubber composition with reference to "Blend of high cis-polybutadiene rubber and styrene-butadiene-styrene-block copolymer" described in pp. 47 to 53 of Journal of the Society of Rubber Science and Technology, Japan, Vol. 44, No. 1 (1971).

(FPS Abrasion Resistance)

The abrasion volume (unit: mm$^3$) of the vulcanized rubber composition was measured using an FPS abrasion tester "AB-2012" (manufactured by Ueshima Seisakusho Co., Ltd.) based on JIS K 6264-2: 2005 "Rubber, vulcanized or thermoplastic - Determination of abrasion resistance -". An index of the FPS abrasion resistance of the vulcanized rubber composition was calculated by the following formula. As this index becomes larger, the FPS abrasion resistance becomes more favorable.

Index of FPS abrasion resistance = (FPS abrasion volumes of Comparative Examples 1 to 4)/(FPS abrasion volumes of Examples 1 to 4 or Comparative Examples 5 to 8) $\times$ 100

[Table 1]

| Example | 1 | 2 | 3 | 4 |
|---|---|---|---|---|
| SBR-1 | 100 | - | - | - |
| SBR-2 | - | 110 | - | 110 |
| SBR-3 | - | - | 80 | - |
| BR | 20 | 20 | 20 | 20 |
| Silica | 75 | 75 | 75 | 75 |
| Carbon black | 5 | 5 | 5 | 5 |
| Stearic acid | 2 | 2 | 2 | 2 |
| Zinc oxide | 3 | 3 | 3 | 3 |
| Anti-aging agent | 1.5 | 1.5 | 1.5 | 1.5 |
| Compound (1) | 2 | 2 | 2 | - |
| Compound (2) | - | - | - | 2 |

(continued)

| Example | 1 | 2 | 3 | 4 |
|---|---|---|---|---|
| TDAE oil | 10 | - | 30 | - |
| Silane coupling agent | 6 | 6 | 6 | 6 |
| Powdered sulfur | 1.3 | 1.3 | 1.3 | 1.2 |
| Vulcanization accelerator (1) | 1 | 1 | 1 | 0.9 |
| Vulcanization accelerator (2) | 2 | 2 | 2 | 2 |
| Vulcanization temperature (°C) | 170 | 170 | 170 | 170 |
| Total amount of C-S-C crosslinks and C-C crosslinks (%) | 44 | 43 | 45 | 39 |
| Amount of C-S-S-C crosslinks (%) | 4 | 0 | 0 | 0 |
| Cis amount of rubber component (mol%) | 32 | 31 | 31 | 31 |
| Index of abrasion resistance | 115 | 107 | 115 | 105 |

[Table 2]

| Comparative example | 1 | 2 | 3 | 4 | 5 | 6 | 7 | 8 |
|---|---|---|---|---|---|---|---|---|
| SBR-1 | 100 | - | - | - | - | 100 | 100 | 100 |
| SBR-2 | - | 110 | - | - | - | - | - | - |
| SBR-3 | - | - | 80 | - | - | - | - | - |
| SBR-4 | - | - | - | 80 | 80 | - | - | - |
| BR | 20 | 20 | 20 | 20 | 20 | 20 | 20 | 20 |
| Silica | 75 | 75 | 75 | 75 | 75 | 40 | 75 | 75 |
| Carbon black | 5 | 5 | 5 | 5 | 5 | 40 | 5 | 5 |
| Stearic acid | 2 | 2 | 2 | 2 | 2 | 2 | 2 | 2 |
| Zinc oxide | 3 | 3 | 3 | 3 | 3 | 3 | 3 | 3 |
| Anti-aging agent | 1.5 | 1.5 | 1.5 | 1.5 | 1.5 | 1.5 | 1.5 | 1.5 |
| Compound (1) | - | - | - | - | 1 | 2 | 2 | - |
| Compound (3) | - | - | - | - | - | - | - | 2 |
| TDAE oil | 10 | - | 30 | 30 | 30 | 10 | 10 | 10 |
| Silane coupling agent | 6 | 6 | 6 | 6 | 6 | 6 | 6 | 6 |
| Powdered sulfur | 2 | 2 | 2 | 2 | 1.6 | 2 | 1.2 | 1.5 |
| Vulcanization accelerator (1) | 1.5 | 1.5 | 1.5 | 1.5 | 1.2 | 1.5 | 0.9 | 1.1 |
| Vulcanization accelerator (2) | 2 | 2 | 2 | 2 | 2 | 2 | 2 | 2 |
| Vulcanization temperature (°C) | 170 | 170 | 170 | 170 | 170 | 170 | 150 | 170 |
| Total amount of C-S-C crosslinks and C-C crosslinks (%) | 25 | 28 | 27 | 12 | 23 | 56 | 4 | 71 |
| Amount of C-S-S-C crosslinks (%) | 5 | 4 | 1 | 3 | 1 | 3 | 3 | 1 |
| Cis amount of rubber component (mol%) | 32 | 31 | 31 | 43 | 43 | 32 | 32 | 32 |
| Index of abrasion resistance | 100 | 100 | 100 | 100 | 100 | 70 | 100 | 85 |

## Claims

1. A vulcanized rubber composition comprising:

    a rubber component containing a diene-based rubber; and
    a filler containing silica,
    wherein a total of an amount of monosulfide crosslinks and an amount of carbon-carbon crosslinks is 30% to 55% based on an amount of total crosslinks of the vulcanized rubber composition.

2. The vulcanized rubber composition according to claim 1, wherein the rubber component contains styrene-butadiene copolymer rubber and butadiene rubber.

3. The vulcanized rubber composition according to claim 1 or 2, wherein a content of a structural unit having a cis bond in the rubber component is 10 mol% or more.

4. The vulcanized rubber composition according to any one of claims 1 to 3, wherein the filler further contains carbon black, and a proportion of the carbon black to the silica is 33 mass% or less.

5. The vulcanized rubber composition according to any one of claims 1 to 4, wherein an amount of disulfide crosslinks is 10% or less based on an amount of total crosslinks of rubber.

6. A tire comprising a rubber member containing the vulcanized rubber composition according to any one of claims 1 to 5.

**INTERNATIONAL SEARCH REPORT**

International application No. **PCT/JP2021/035171**

**A. CLASSIFICATION OF SUBJECT MATTER**

***B60C 1/00***(2006.01)i; ***C08L 9/00***(2006.01)i; ***C08L 9/06***(2006.01)i; ***C08K 3/013***(2018.01)i; ***C08K 3/04***(2006.01)i; ***C08K 3/36***(2006.01)i

FI: C08L9/00; C08K3/013; C08K3/36; C08L9/06; C08K3/04; B60C1/00 Z

According to International Patent Classification (IPC) or to both national classification and IPC

**B. FIELDS SEARCHED**

Minimum documentation searched (classification system followed by classification symbols)

B60C1/00; C08L9/00; C08L9/06; C08K3/013; C08K3/04; C08K3/36

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/175344 A1 (SUMITOMO CHEMICAL CO) 03 September 2020 (2020-09-03) claims, compounds (Ia-a), (IIa-1), examples 1-5, 13-15, 18-21 | 1-6 |
| X | JP 2019-52297 A (SUMITOMO CHEMICAL CO) 04 April 2019 (2019-04-04) claims, compound (Ib-1), examples 1-66 | 1-6 |
| A | JP 2005-220181 A (BRIDGESTONE CORP) 15 August 2005 (2005-08-15) | 1-6 |
| A | JP 2020-111674 A (SUMITOMO RUBBER IND) 27 July 2020 (2020-07-27) | 1-6 |
| A | JP 2013-35961 A (SUMITOMO RUBBER IND LTD) 21 February 2013 (2013-02-21) | 1-6 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 November 2021** | **22 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/035171**

| Patent document cited in search report | Publication date (day/month/year) | Patent family member(s) | Publication date (day/month/year) |
|---|---|---|---|
| WO 2020/175344 A1 | 03 September 2020 | (Family: none) | |
| JP 2019-52297 A | 04 April 2019 | US 2020/0207969 A1<br>claims, examples, compound (Ib-1)<br>WO 2019/054290 A1<br>EP 3683263 A1<br>TW 201925300 A<br>KR 10-2020-0047709 A<br>CN 111094428 A | |
| JP 2005-220181 A | 15 August 2005 | (Family: none) | |
| JP 2020-111674 A | 27 July 2020 | (Family: none) | |
| JP 2013-35961 A | 21 February 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010018716 A
- JP 2019052297 A


### Non-patent literature cited in the description


- Analysis of Crosslinking Structure by Compressive Property of the Swollen Rubber (Part 1) Development of Testing Method. *Journal of the Society of Rubber Science and Technology, Japan,* 1987, vol. 60 (5), 267-272
- Blend of high cis-polybutadiene rubber and styrene-butadiene-styrene-block copolymer. *Journal of the Society of Rubber Science and Technology,* 1971, vol. 44 (1), 47-53